Europäisches Patentamt

European Patent Office

Office européen des brevets

(19)

(11) **EP 0 975 126 B1**

(12) **FASCICULE DE BREVET EUROPEEN**

(45) Date de publication et mention
de la délivrance du brevet:
**09.03.2005 Bulletin 2005/10**

(51) Int Cl.⁷: **H04L 27/227**

(21) Numéro de dépôt: **99410086.5**

(22) Date de dépôt: **20.07.1999**

(54) **Procédé d'estimation d'erreur de fréquence d'un d'émodulateur QPSK**

**Verfahren zur Schätzung des Frequenzfehlers in einem QPSK-Demodulator**

**Method for estimating the frequency error in a QPSK demodulator**

(84) Etats contractants désignés:
**DE FR GB IT**

(30) Priorité: **23.07.1998 FR 9809578**

(43) Date de publication de la demande:
**26.01.2000 Bulletin 2000/04**

(73) Titulaire: **STMicroelectronics S.A.**
**92120 Montrouge (FR)**

(72) Inventeur: **Meyer, Jacques**
**38950 Saint Martin le Vinoux (FR)**

(74) Mandataire: **de Beaumont, Michel**
**1, rue Champollion**
**38000 Grenoble (FR)**

(56) Documents cités:
**EP-A- 0 355 587**      **EP-A- 0 491 403**
**WO-A-93/11605**      **FR-A- 2 670 967**
**GB-A- 2 207 582**      **US-A- 4 466 108**
**US-A- 5 495 510**      **US-A- 5 579 345**
**US-A- 5 684 835**

**Description**

La présente invention concerne un démodulateur dit QPSK destiné à reconstruire deux signaux binaires véhiculés par deux porteuses de même fréquence mais en quadrature de phase. La présente invention concerne plus spécifiquement un estimateur de l'erreur de la fréquence sur laquelle une boucle à verrouillage de phase du démodulateur est réglée.

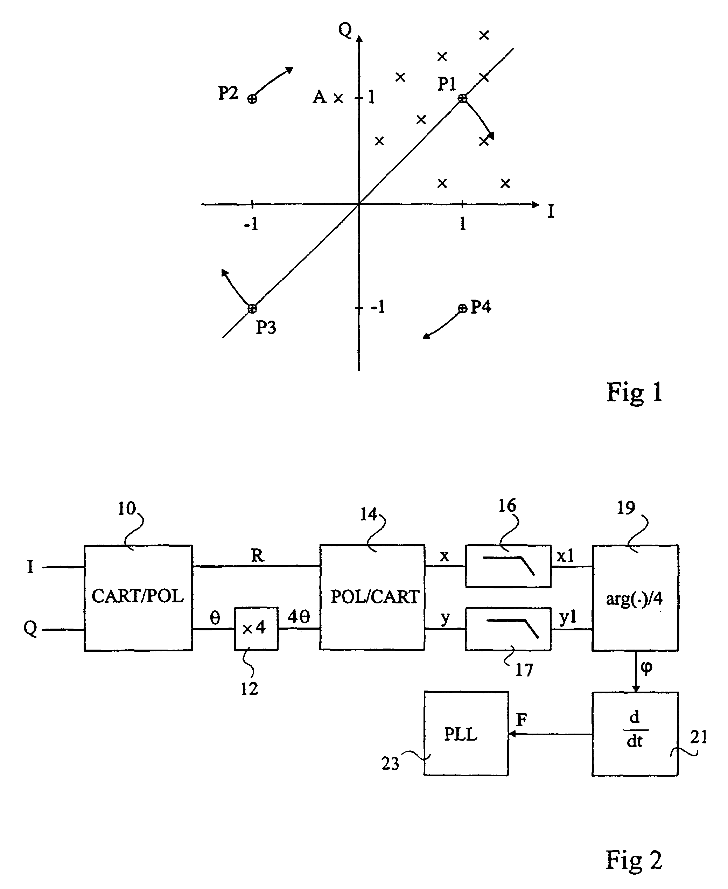

La figure 1 représente sous forme de constellation des couples de valeurs, ou symboles, correspondant aux valeurs successives des deux signaux binaires reconstruits par le démodulateur. Cette constellation représente des points dont chacun a pour coordonnées les valeurs I et Q des deux signaux binaires à un instant donné. Théoriquement, les points sont confondus avec des points P1 à P4 de coordonnées respectives (1, 1), (-1, 1), (-1, -1), et (1, -1).

Toutefois, comme cela est représenté dans le premier quadrant de la constellation, des points qui devaient être confondus avec le point P1 forment un nuage de points autour de ce point P1 à cause de diverses erreurs et de bruit dans la transmission.

Un démodulateur QPSK est généralement formé d'une boucle à verrouillage de phase (PLL) destinée à régler la fréquence d'un oscillateur local sur la fréquence de porteuse par une analyse des points de la constellation. Afin de filtrer le bruit, la PLL a une bande passante très faible, de l'ordre du millième de la fréquence de transmission, ou fréquence symbole, des signaux binaires. De ce fait, la PLL a aussi une plage de capture étroite, qui de plus diminue lorsque le bruit augmente. Cette plage est de l'ordre de 0,5 % de la fréquence symbole avec un rapport signal sur bruit de 3dB. La fréquence de porteuse est généralement imparfaitement connue et le décalage peut être de plusieurs fois la fréquence symbole. Ainsi, si on ne prend pas de mesures particulières, la PLL ne parvient à se régler sur la fréquence de porteuse.

Lorsque la fréquence de la PLL est mal réglée, la constellation de points reçus tourne, comme cela est illustré par des flèches en figure 1, à une vitesse égale à l'erreur de fréquence.

Une première solution classique pour trouver une fréquence située dans la plage de capture de la PLL consiste à régler la fréquence de la PLL sur des valeurs successives choisies jusqu'à ce que l'on détecte un verrouillage de la PLL. Une détection de verrouillage de PLL est une opération relativement lente qui nécessite l'analyse d'un nombre élevé de symboles pour chaque fréquence essayée. Le nombre de symboles à analyser croît avec le bruit. Dans les transmissions par satellite, on tolère généralement un rapport signal sur bruit aussi faible que 3 dB. Dans ce cas, il faut analyser plusieurs dizaines de milliers de symboles pour détecter le verrouillage, ce qui ralentit considérablement la cadence des essais de fréquence successifs et donc la vitesse à laquelle le démodulateur est réglé sur la fréquence de porteuse.

D'autres solutions utilisent un estimateur d'erreur de fréquence destiné à ramener la fréquence du démodulateur en une seule tentative à l'intérieur de sa plage de capture. Un exemple d'estimateur de fréquence est décrit dans l'article intitulé "Frequency Detectors for PLL Acquisition in Timing and Carrier Recovery" par David G. Messerschmitt, IEEE Transactions on Communications, volume 27, N° 9, septembre 1979.

Cet estimateur exploite certaines propriétés du signal et fournit une valeur en principe proportionnelle à l'erreur de fréquence. Toutefois, ce type d'estimateur fournit la position du centre de gravité du spectre du signal et ne fonctionne donc convenablement que si ce spectre est symétrique. Dans la plupart des situations réelles, le spectre n'est pas toujours symétrique du fait des caractéristiques des éléments de transmission du signal, qui fluctuent par rapport aux caractéristiques théoriques souhaitées. Ainsi, la valeur de fréquence fournie par l'estimateur fluctue en pratique de plusieurs centièmes de la fréquence symbole et tombe souvent hors de la page de capture de la PLL.

Un détecteur d'erreur de fréquence est décrit dans l'article intitulé "New Phase and Frequency Detectors for Carrier Recovery in PSK and QAM Systems", par Hikmet Sari et Saïd Moridi, IEEE Transactions on Communications, volume 36, N° 9, septembre 1988.

Ce détecteur analyse l'évolution de l'erreur de phase de la PLL. En effet, dans le cas d'une erreur de fréquence, la phase évolue linéairement en fonction du temps, ceci modulo $\pi/2$ dans un démodulateur QPSK. En absence de bruit, la phase varie en dent de scie entre $-\pi/4$ et $\pi/4$, et la fréquence correspond à la pente de chacune des rampes de la dent de scie. Le système proposé fournit l'erreur de phase mesurée lorsqu'elle est comprise entre un seuil positif et un seuil négatif, et fournit la dernière valeur mesurée entre ces seuils sinon.

Toutefois, en présence de bruit important, les points de chaque rampe sont superposés à des erreurs aléatoires pouvant souvent excéder $\pi/4$ en valeur absolue. Il est alors pratiquement impossible d'avoir un résultat fiable.

Un autre détecteur d'erreur de fréquence (phase) et de récupération d'une porteuse dans un démodulateur QPSK est décrit dans FR 2 670 967.

Un objet de la présente invention est de prévoir un estimateur d'erreur de fréquence d'un démodulateur QPSK, qui soit particulièrement fiable, même en présence de bruit important.

Cet objet est atteint grâce à un procédé d'estimation de l'erreur de fréquence d'un démodulateur destiné à reconstruire deux signaux binaires véhiculés sur deux porteuses de même fréquence mais en quadrature de phase, comprenant les étapes consistant à former des vecteurs ayant pour composantes les couples successifs de valeurs des deux signaux binaires ; à appliquer à chaque vecteur une transformation qui multiplie par quatre son angle au moins lorsqu'il est égal à un multiple des vecteurs transformés.

La transformation est une transformation linéaire par morceaux qui fait correspondre à chaque vecteur un vecteur image situé sensiblement dans le même quadrant du plan image qu'un vecteur image obtenu par multiplication par quatre de l'angle du vecteur.

Selon un mode de réalisation de la présente invention, l'erreur de fréquence est fournie par le calcul de la dérivée de l'angle du vecteur moyen.

Selon un mode de réalisation de la présente invention, la dérivée est fournie sous forme de différence, modulo $\pi/2$, de deux valeurs d'angle successives.

Selon un mode de réalisation de la présente invention, on attribue une phase de 0 aux vecteurs image situés dans les deuxième et troisième quadrants du plan image, une phase +1 aux vecteurs image situés dans le premier quadrant, et une phase -1 aux vecteurs image situés dans le quatrième quadrant, une information d'erreur de fréquence étant fournie par la différence des valeurs de phase attribuées au vecteur image courant et au vecteur image précédent, laquelle différence est fournie modulo 2 si elle est positive et modulo -2 si elle est négative.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

> la figure 1, précédemment décrite, représente une constellation correspondant à des symboles reconstitués par un démodulateur QPSK ;
> la figure 2 représente un schéma de principe d'un estimateur d'erreur de fréquence selon l'invention ;
> la figure 3 illustre l'image d'un cercle de la constellation de la figure 1 par une transformation simplifiée permettant d'obtenir un résultat équivalent à celui que l'on obtiendrait en utilisant le circuit de la figure 2 ; et
> la figure 4 représente un exemple de filtre de moyenne utilisé dans le circuit de la figure 2.

Afin d'estimer l'erreur de fréquence d'un démodulateur QPSK, on propose selon la présente invention, de calculer la phase moyenne des symboles et de dériver cette phase moyenne afin de trouver l'erreur de fréquence.

On pourrait pour cela utiliser un détecteur de phase classique, en effectuant en outre un filtrage passe-bas sur les valeurs de phase. Ceci aurait pour conséquence un lissage du bruit permettant de retrouver une évolution proche d'une dent de scie d'amplitude $\pi/2$.

Toutefois, en présence de bruit important, un grand nombre de valeurs de phase instantanées dépassent les limites d'amplitude de la dent de scie et engendrent des contributions erronées au calcul de moyenne. Par exemple, si la dent de scie varie entre $-\pi/4$ et $\pi/4$, une phase instantanée de valeur $-\pi/4 - \varepsilon$ est transformée

en une phase de valeur $+\pi/4 - \varepsilon$, d'où il résulte que cette phase instantanée est comptabilisée avec une erreur de $\pi/2$ dans le calcul de moyenne.

Dans un milieu fortement bruité, la probabilité pour avoir de telles valeurs hors limites est si élevée que la valeur moyenne est trop entachée d'erreurs pour être exploitable.

Pour éviter ces inconvénients, on prévoit selon l'invention, de calculer la moyenne sur des symboles qui ont subi une rotation de quatre fois leur angle de départ tout en conservant sensiblement leur module.

Avec une telle transformation, deux symboles quelconques qui ont la même position modulo $\pi/2$ dans la constellation d'origine ont la même position absolue dans la constellation image. En d'autres termes, toute erreur de $\pi/2$ que l'on pourrait faire en considérant les phases dans la constellation d'origine du fait qu'on ne sait pas lequel des quatre symboles (I, Q) a été émis, est supprimée dans la constellation image grâce à une telle transformation. En effet, tout symbole affecté d'une erreur de $\pi/2$ est confondu avec le symbole correct dans la constellation image.

La figure 2 représente un schéma de principe d'un exemple de circuit mettant en oeuvre le procédé susmentionné. Les couples de valeurs I et Q des deux signaux binaires reconstruits par le démodulateur sont fournis à un convertisseur cartésien-polaire 10 qui calcule le module R du vecteur de coordonnées (I, Q) et l'angle $\theta$ de ce vecteur par rapport à l'axe horizontal (I à la figure 1). L'angle $\theta$ est multiplié par 4 en 12 avant d'être fourni, avec le module R, à un convertisseur polaire-cartésien 14 qui calcule un couple de coordonnées (x, y) correspondant. Les moyennes x1 et y1 des évolutions des coordonnées x et y sont fournies par des filtres passe-bas respectifs 16 et 17. Un circuit 19 fournit le quart de l'argument de chaque vecteur de composantes (x1, y1) fournies par les filtres 16 et 17. Ainsi, le circuit 19 fournit la phase moyenne $\varphi$ correspondant à l'angle de la moyenne des vecteurs de composantes (I, Q), dépourvue des erreurs de $\pi/2$ qui pouvaient être provoquées par des symboles ayant une erreur de phase hors des limites de $-\pi/4$ et $\pi/4$.

Un dérivateur 21 fournit l'erreur de fréquence F recherchée à partir de la phase moyenne $\varphi$. Cette erreur est proportionnelle à la différence d entre deux angles $\varphi$ successifs, modulo $\pi/2$, c'est-à-dire que si la différence d est, par exemple, supérieure à $\pi/4$, on prend la valeur $d - \pi/2$ qui est comprise entre $-\pi/4$ et $\pi/4$. L'erreur de fréquence F peut être utilisée directement pour corriger la valeur de consigne de fréquence d'une boucle à verrouillage de phase 23.

On remarque que le circuit de la figure 2 ne calcule pas directement la moyenne des angles des vecteurs de composantes (x, y), mais calcule d'abord la moyenne de chacune des composantes x et y, c'est-à-dire un vecteur moyen, puis calcule l'angle de ce vecteur moyen. Cette façon de procéder constitue un aspect important de l'invention. En effet, elle permet de lever des ambiguïtés lorsque des symboles sont reçus près des axes I et Q de la constellation de la figure 1.

Par exemple, on suppose que la constellation reçue est décalée de -π/4 par rapport à la constellation théorique, c'est-à-dire que les points correspondant aux points théoriques P1 à P4 se trouvent sur les axes I et Q. On dira alors que la phase de la constellation est nulle. Il est très probable de recevoir un symbole de coordonnées (1, ε) correspondant au point P1, et un symbole de coordonnées (ε, 1), correspondant au point P2, où ε est une faible composante parasite liée au bruit. Ces points sont à des angles respectifs ε et π/2 - ε. La multiplication par quatre de ces angles fournit respectivement 4ε et 2π - 4ε. La moyenne de ces angles, divisée par 4, fournit la valeur π/4 comme estimation de la phase, ce qui est incorrect puisque la phase est nulle dans cet exemple. Par contre, les composantes des vecteurs après transformation étant respectivement (1, 4ε) et (1, -4ε), le vecteur moyen correspondant, de composantes (1, 0), a un angle nul, ce qui est la valeur exacte de la phase de la constellation reçue.

On remarquera en outre que, si on n'applique pas la transformation selon l'invention, ni le calcul de l'angle moyen, ni le calcul du vecteur moyen, ne fournissent une phase correcte (π/4 dans les deux cas).

Le fait de calculer d'abord le vecteur moyen présente également l'avantage de donner un effet prépondérant aux vecteurs de grand module qui ont une probabilité plus importante d'avoir un angle correct que les vecteurs de faible module. En effet, une même composante de bruit affecte beaucoup moins l'angle d'un vecteur de module élevé que l'angle d'un vecteur de faible module.

Le circuit de la figure 2 est particulièrement complexe à réaliser en pratique du fait des convertisseurs cartésien-polaire et polaire-cartésien qui doivent réaliser des calculs trigonométriques. Il en va de même pour le circuit 19 qui fournit l'angle du vecteur de composantes (x1, y1).

Selon un mode de réalisation de la présente invention, on propose un circuit fournissant un résultat final équivalent à celui de la figure 2, mais qui soit plus simple à réaliser. Pour cela, on utilise une transformation linéaire qui ne transforme plus un cercle en un cercle comme le ferait le circuit de la figure 2, mais qui multiplie par quatre les angles multiples de π/4. Un exemple de telle transformation est la suivante :

en notant

$$Sup = max(|I|, |Q|),$$

$$Inf = min(|I|, |Q|),$$

et

$$Sgn = signe(IQ(|I| - |Q|)),$$

si 4Inf < Sup alors

$$x = Sup$$

et

$$y = 4\ Sgn \cdot Inf$$

sinon

$$x = 2Sup - 4Inf$$

et

$$y = 2Sgn(Sup-Inf)$$

où I et Q sont les composantes des vecteurs de départ et x et y les composantes des vecteurs image.

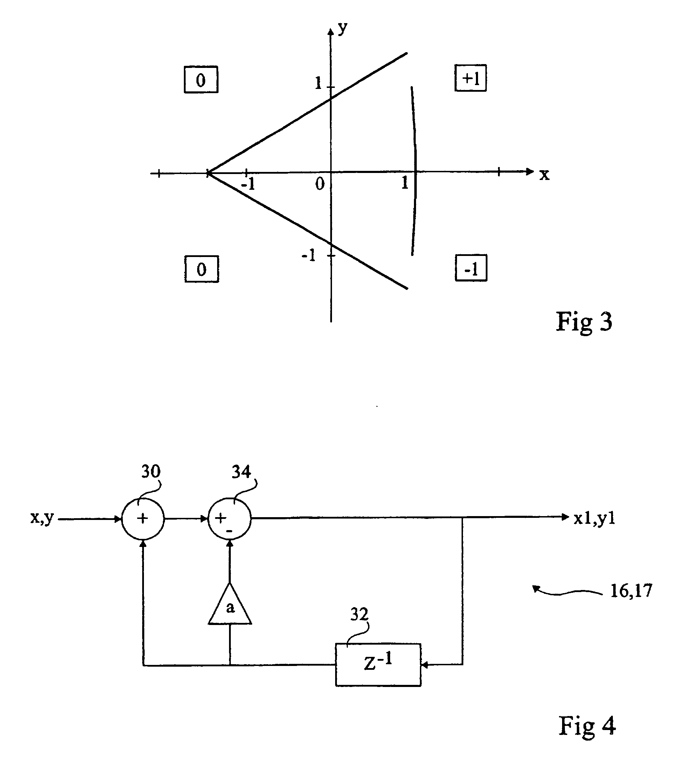

La figure 3 représente l'image obtenue selon cette transformation d'un cercle de rayon 1 de la constellation de la figure 1. Les images des points théoriques P1 à P4 se trouvent sur l'axe des x, du côté négatif. Les vecteurs d'angle compris entre, sensiblement, 30° et 60° (modulo 90°) ont des images dans les deuxième et troisième quadrants de la figure 3. Les vecteurs d'angle compris entre 0 et sensiblement 30° (modulo 90°) ont des images dans le premier quadrant, tandis que les vecteurs d'angle compris entre sensiblement 60° et 90° (modulo 90°) ont des images dans le quatrième quadrant.

Comme dans le circuit de la figure 2, les filtres passe-bas 16 et 17 fournissent les moyennes x1 et y1 des composantes x et y obtenues après cette transformation.

D'autres transformations linéaires par morceaux pourront être envisagées. Elles devront toutefois, comme la transformée ci-dessus, multiplier par quatre au moins les angles multiples de π/4.

Les circuits 19 et 21 de calcul d'angle et de dérivation de la figure 2 pourraient être conservés. Toutefois, le circuit de calcul d'angle 19 doit effectuer un calcul d'arc-tangente, ce qui est relativement complexe et incompatible avec la simplification de calcul obtenue grâce à la transformée linéaire par morceaux qui précède.

Selon un mode de réalisation, on propose d'utiliser seulement la polarité de l'angle image moyen pour fournir une indication d'erreur de fréquence. Plus exactement, si le point image moyen (x1, y1) est situé dans le deuxième ou troisième quadrant de la figure 3, on affecte une valeur nulle à la phase φ. Si le point image moyen est situé dans le premier quadrant, on affecte la valeur 1 à la phase φ. Finalement, si le point image moyen est situé dans le quatrième quadrant, on affecte la valeur -1 à la phase φ. La dérivation effectuée par le circuit 21 consiste à soustraire la valeur précédente de la phase φ à la valeur courante, le résultat étant fourni modulo 2 si la différence est positive et modulo -2 si la différence est négative (en d'autres termes, la différence est annulée si elle est égale à 2 ou à -2).

Ainsi, lorsque la constellation reçue tourne à vitesse constante, cette dérivation fournit une succession de valeurs 1 ou -1 (selon le sens de rotation), séparées par un même nombre de valeurs nulles, le nombre de valeurs nulles augmentant lorsque la vitesse de rotation diminue.

Cette dérivation ne fournit donc pas directement une valeur de fréquence que l'on peut appliquer en consigne à la PLL 23, mais des incréments positifs ou négatifs que l'on applique à cette consigne, les incréments étant d'autant plus rapprochés que la vitesse de rotation de la constellation reçue est élevée.

Les opérations décrites ci-dessus seront généralement effectuées sur des signaux numériques, par exemple de manière câblée. Le fait que le dernier mode de réalisation décrit ne nécessite que des calculs linéaires permet d'utiliser un circuit câblé particulièrement simple ne devant pas réaliser d'opérations trigonométriques.

La figure 4 représente un exemple numérique des filtres 16 et 17. La composante x ou y est fournie à un additionneur 30 qui reçoit également la sortie x1 ou y1 du filtre par l'intermédiaire d'un élément 32 de retard d'un échantillon. La sortie x1 ou y1 du filtre est fournie par un soustracteur 34 qui calcule la différence entre la sortie de l'additionneur 30 et la sortie de l'élément de retard 32, multipliée par un coefficient a. De bons résultats sont obtenus avec a = 1/8.

## Revendications

1. Procédé d'estimation de l'erreur de fréquence d'un démodulateur destiné à reconstruire deux signaux binaires (I, Q) véhiculés sur deux porteuses de même fréquence mais en quadrature de phase, comprenant les étapes suivantes :

   - former des vecteurs ayant pour composantes les couples successifs de valeurs (I, Q) des deux signaux binaires ;
   - appliquer à chaque vecteur une transformation qui multiplie par quatre son angle au moins lorsqu'il est égal à un multiple de π/4 et conserve sensiblement son module ; et
   - calculer la moyenne (x1, y1) des vecteurs transformés ;

   **caractérisé en ce que** la transformation est une transformation linéaire par morceaux qui fait correspondre à chaque vecteur un vecteur image situé sensiblement dans le même quadrant du plan image qu'un vecteur image obtenu par multiplication par quatre de l'angle du vecteur.

2. Procédé d'estimation d'erreur de fréquence selon la revendication 1, **caractérisé en ce que** l'erreur de fréquence est fournie par le calcul de la dérivée de l'angle (φ) du vecteur moyen.

3. Procédé d'estimation d'erreur de fréquence selon la revendication 2, **caractérisé en ce que** la dérivée est fournie sous forme de différence, modulo π/2, de deux valeurs d'angle successives.

4. Procédé d'estimation d'erreur de fréquence selon la revendication 1, **caractérisé en ce que** l'on attribue une phase de 0 aux vecteurs image situés dans les deuxième et troisième quadrants du plan image, une phase +1 aux vecteurs image situés dans le premier quadrant, et une phase -1 aux vecteurs image situés dans le quatrième quadrant, une information d'erreur de fréquence étant fournie par la différence des valeurs de phase attribuées au vecteur image courant et au vecteur image précédent, laquelle différence est fournie modulo 2 si elle est positive et modulo -2 si elle est négative.

## Patentansprüche

1. Verfahren zum Schätzen des Frequenzfehlers eines Demodulators, der vorgesehen ist, zwei Binärsignale (I, Q) zu rekonstruieren, die von zwei Trägern der gleichen Frequenz, jedoch in Quadratur und Phase übertragen werden, wobei das Verfahren die Schritte umfaßt:

   - Ausbilden von Vektoren, die als Komponenten die aufeinanderfolgende Wertepaare (I, Q) der zwei Binärsignale aufweisen;
   - Ausführen einer Transformation bezüglich jedes Vektors, wobei die Transformation dessen Winkel mit vier multipliziert, zumindest wenn dieser gleich einem Vielfachen von π/4 ist, und die ferner im wesentlichen dessen Betrag bewahrt; und
   - Berechnen des Mittelwerts (x1, y1) der transformierten Vektoren,

   **dadurch gekennzeichnet, daß** die Transformation eine stückweise lineare Transformation ist, durch die jeder Vektor einem Bildvektor entspricht, der im wesentlichen in dem gleichen Quadranten der Bildebene wie ein Bildvektor liegt, der sich durch die Multiplikation des Vektorwinkels mit vier ergibt.

2. Verfahren zum Schätzen des Frequenzfehlers nach Anspruch 1, **dadurch gekennzeichnet, daß** die Berechnung der Ableitung des Winkels (φ) des gemittelten Vektors den Frequenzfehler vorsieht.

3. Verfahren zum Schätzen des Frequenzfehlers nach Anspruch 2, **dadurch gekennzeichnet, daß** die Ableitung als Differenz zweier aufeinanderfolgender Winkelwerte Modulo $\pi/2$ vorgesehen ist.

4. Verfahren zum Schätzen des Frequenzfehlers nach Anspruch 1, **dadurch gekennzeichnet, daß** den Bildvektoren, die in dem zweiten oder dritten Quadranten der Bildebene liegen, eine Phase von 0 zugewiesen wird, den Bildvektoren, die in dem ersten Quadranten liegen, eine Phase von +1 zugewiesen wird, und den Bildvektoren, die in dem vierten Quadranten liegen, eine Phase von -1 zugewiesen wird, wobei die Differenz der Phasenwerte, welche dem aktuellen Bildvektor und dem vorhergehenden Bildvektor zugewiesen werden, eine Information über den Frequenzfehler vorsieht, wobei die Differenz Modulo 2 vorgesehen wird, wenn sie positiv ist, und Modulo -2 vorgesehen wird, wenn sie negativ ist.

**Claims**

1. A method for estimating the frequency error of a demodulator for restoring two binary signals (I, Q) carried on two carriers of same frequency but in phase quadrature, including the steps of:

   - forming vectors having as components the successive couples of values (I, Q) of the two binary signals;
   - applying to each vector a transform which multiplies by four its angle at least when it is equal to a multiple of $\pi/4$ and which substantially preserves its module; and
   - calculating the average (x1, y1) of the transformed vectors;

      **characterized in that** the transform is a piecewise linear transform which makes correspond to each vector an image vector located substantially in the same quadrant of the image plane as an image vector obtained by multiplying by four the vector angle.

2. The frequency error estimation method of claim 1, **characterized in that** the frequency error is provided by calculating the derivative of the angle (φ) of the average vector.

3. The frequency error estimation method of claim 2, **characterized in that** the derivative is provided in the form of a difference, modulo $\pi/2$, of two successive angle values.

4. The frequency error estimation method of claim 1, **characterized in that** a phase of 0 is assigned to the image vectors located in the second and third quadrants of the image plane, a phase of +1 is assigned to the image vectors located in the first quadrant, and a phase of -1 is assigned to the image vectors located in the fourth quadrant, a frequency error information being provided by the difference of the phase values assigned to the current image vector and to the preceding image vector, which difference is provided modulo 2 if it is positive, and modulo -2 if negative.

Fig 1

Fig 2

Fig 3

Fig 4